# EUROPEAN PATENT SPECIFICATION

(11) **EP 3 562 739 B1**
(45) Date of publication and mention of the grant of the patent: **02.12.2020**
(21) Application number: 17842379.4
(22) Date of filing: 22.12.2017
(51) Int. Cl.: B64C 27/02, B64C 37/00, B64C 25/34, B64D 27/02

(54) **ELECTRIC DRIVE SYSTEM OF GYROPLANE**
ELEKTRISCHES ANTRIEBSSYSTEM EINES TRAGSCHRAUBERS
SYSTÈME D'ENTRAÎNEMENT ÉLECTRIQUE D'AUTOGIRE

(30) Priority: 29.12.2016 CZ 20160840
(43) Date of publication of application: 06.11.2019
(73) Proprietor: Brezina, Pavel, 760 01 Zlin (CZ)
(72) Inventor: Brezina, Pavel, 760 01 Zlin (CZ)
(74) Representative: Kendereski, Dusan
(86) International application number: PCT/CZ2017/050064
(87) International publication number: WO 2018/121804

(56) References cited:
- WO-A1-2015/075538
- CA-A- 795 663
- GB-A- 143 591
- US-A1- 2006 065 779
- US-A1- 2011 036 939
- US-A1- 2013 168 489
- US-A1- 2016 052 624
- US-A1- 2016 159 470
- US-B1- 6 978 969

## Description

### Technical Field

The invention relates to an electric drive system of a gyroplane comprising a primary engine connected with a support rotor for movement in air and a secondary motor for movement on the road, wherein the gyroplane is further provided with safety means for its movement on the road.

### State of the Art

In present, gyroplanes are manufacture mainly for transportation of people, most often two passengers. The gyroplane is propelled forwards by means of a combustion engine or a pusher propeller. In contrast to helicopter, the gyroplane is uplifted by means of a rotor, which is rotated by air pushing the rotor blades when the gyroplane moves forwards. During flight, gyroplanes are capable of skillful maneuvers and excel in high safety. On the ground, the gyroplane must be moved manually or by means of a motor and pusher propeller. The pusher propeller is, of course, not covered and thus poses danger for the surroundings. Air flow behind the pusher propeller should also be considered dangerous. Therefore, it is impossible to use a gyroplane on the road legally, although its dimensions would allow this.

The patent application US 2016052624 A1 describes a system for restoring mobility of an aircraft. The aircraft is provided with at least one own self-propelled drive wheel, controlled by driver for driving on a roadway. The drive of the drive wheel may be a high phase order electric motor or an electric induction motor with permanent magnets, a brushless DC motor, switched reluctance motor, hydraulic motor or a pneumatic motor.

The patent application US 2016159470 A1 describes a method for increasing aircraft effective value, characterized in that the propelled wheels are provided with a drive for its autonomous movement on the ground, without using the main aircraft engines or external tow vehicles. The drive for autonomous movement is mounted so that it drives one or more aircraft wheels. This drive system for driven aircraft wheels is controlled by the pilot and allows movement of the aircraft on the ground independently from the main engines. The drive of the driven wheel is designed so as to reduce aircraft operation costs when moving on the runway and increase savings for aircraft operation.

A modular vehicle structure described in the US patent application US 2013168489 A1 allows adapting the vehicle for flying. The structure includes a wing, which may be removed, tilted, rotated, controller or "locked in" place, for various operation methods as well as various needs of customers. The wing rotating by means of a NACA 23112 profile provides longitudinal stability thanks to changes of wing settings or power. The wing may be also "locked" so as to provide conventional vehicle type control. The wings are tilted for driving on the ground or they may be removed. Horizontal stabilizer provides balance and stability for balancing the vehicle in order to provide comfort to passenger and for optimal landing. The trunk consists of three main modules, the main central module consisting of a motor, a gearbox, wings and a loading spaces, further the front and rear modules, which may comprise one or two wheels or may be further provided with a motor or no motor.

A road vehicle, such as a motor car with alternative arrangement, thanks to which it may be used as a plane, is described in the Canadian patent application CA 795663 A. The vehicle comprises a vehicle body, support wing, attachment means for attaching the support wing to the vehicle body and means for folding down the said wing when driving on the ground. The folding means for the wing may further comprise additional means for tilting the vehicle in order to change the angle of impact of the said wing. These tilting means include a control element, by means of which a rear wheel carrying the said vehicle may be moved so as the front part of the body to tilt backwards in a predetermined range.

An aircraft with folding wings and means for driving the landing wheels intended for movement on the ground, consisting of two engines, wherein one engine drives the propeller and the other engine drives the driving wheels, is described in UK patent application GB 143591 A. The propeller is driven by the engine, which may be started with the second engine. The second engine is adapted to drive the landing wheels through gearwheels, universal gears, cardan shaft, differential gear ratio, or through a toothed chain. The casings of the axle wheels are connected by means of adjustable brackets or radius arms with a differential housing and movement of the wheels is realized along the arc around the differential gear wheel, wherein their movement is limited by the clamps on the brackets. The steering is performed using arms, which are controlled in the cockpit by means of wires connected to the arms on the vertical spindle.

The US patent US 6978969 B1 discloses a fly-drive vehicle including a vehicle body, a motor mounted on the vehicle body, at least one rotor rotatably attached to the vehicle body, a pair of wheels each rotatably attached to a lower portion of the vehicle body, a drive propeller rotatably coupled to the vehicle body, a transmission for selectively transferring mechanical power from the motor to at least one of the pair of wheels or to the drive propeller, and a front wheel control mechanism. The fly-drive vehicle also includes a landing gear assembly for raising and lowering the pair of wheels with respect to the vehicle body and a folding rotor shaft assembly for raising and lowering the rotor with respect to the vehicle body. The landing gear assembly and the transmission transfer power to at least one of the pair of wheels mechanically by means of a pair of struts, a hydraulic actuator connected to a vertically adjustable post that supports the driven wheel, a drive shaft attached to a sprag or centripetal clutch that is connected by a chain or belt drive to a gear mounted on the driven wheel.

The US patent application US 2011036939 A1 discloses a hybrid fixed wing aircraft convertible into a roadworthy vehicle, which is operable in both air and ground transportation systems. The vehicle has a synchronized control and an electric drive system that switches from flight to ground mode without input from the operator, thereby providing a natural interface for the operator. The electric drive system comprises an engine connected with a pusher propeller suitable for movement in air and two electric motors suitable for movement on the ground. The engine may be connected to an alternator in order to augment power of batteries in a hybrid power mode of operation. The circuitry may operate using dual voltages, supplied by 12 V bus and 24 V bus, whereby a series/parallel relay may be used to selectively switch between 12 V bus and 24 V bus for charging or discharging batteries in aircraft mode (24 V) or ground mode (12 V).

To control the movement of the vehicle, a joystick in combination with a signal conditioner and a mixer provide differential control signals to two controllers, which in turn drive armatures of the wheel electric motors. The electric motors are arranged within the wheels of the landing gears on the axle, that is the rotor (magnets, armatures) rotates with the wheel, while the stator (stationary windings) are mounted to an axle of the wheel and remain stationary relative to the support strut.

The US patent application US 2006065779 A1 discloses a powered nose aircraft wheel system for an aircraft, including a landing gear that extends from the aircraft. A wheel axle is coupled to the landing gear and a wheel. A wheel electric motor is coupled to the wheel axle and the wheel. A controller is coupled to the wheel electric motor and rotates the wheel. The wheel electric motor is arranged coaxially in a rim of the driven wheel, wherein a planetary gearbox is further arranged in the rim.

The aim of the invention is to provide an electric drive system of a gyroplane, allowing gyroplanes to ride in a traffic. For this purpose, they are provided with means and devices which allow their movement on the public roads. This is achieved by implementing an electric motor for movement on the ground, which is at least partially independent from the primary engine driving the pusher propeller, wherein the electric motor is arranged outside the at least one driven wheel.

### Summary of the Invention

The above mentioned aim is achieved by a gyroplane according to the present invention as defined in appended independent claim 1. An electric drive system of the gyroplane, comprising a support rotor and a primary engine connected with a pusher propeller for movement in air, comprises an electric motor for movement on roads. The primary engine is connected by means of a mechanical gear to an alternator, which is coupled with a charger, which is further connected to a traction battery. The traction battery is further electrically connected with a regulator and a pilot control unit, while the regulator is further connected with the electric motor driving a driven chassis wheel. The subject-matter of the present invention discloses that the electric motor is arranged outside the driven chassis wheel in a support structure, which is firmly connected with a fork. The electric motor is provided with a small pulley and connected with the driven chassis wheel by means of a belt or chain. The traction battery is bi-directionally connected with a Battery Management System.

Further aspects of the invention are defined according to the appended dependent claims. In order to allow the gyroplane to legally move on the road, the electric drive system of a gyroplane has the primary engine connected with the pusher propeller by means of a detachable coupling. The connection allows detaching the pusher propeller from the primary engine after landing or after gyroplane enters the road, wherein the primary engine remains still in operation and generates electric energy for electric motor. Part of the traction battery is a "Battery Management System", which is an integral system of control units and modules, monitoring the operation states of the battery in order to provide security. The operation states are controlled by means of measurable values, such as, for example, temperature and battery cell voltage. Moreover, in case of risk of battery damage, the Battery Management System is capable to securely disconnect the battery from operation of the electric drive system of a gyroplane. For easily manipulation and simple maintenance of the electric drive system, the electric motor is arranged on a support structure of the driven wheel. The torque moment is transferred from the electric motor to the driven travelling wheel through a pulley by means of a belt or chain.

To reduce aerodynamic resistance and to protect the driven travelling wheel and the electric motor against outer mechanical damages, these components are housed in a casing.

Advantage of the present solution is the fact that it allows implementation of the electric drive for one or more gyroplane chassis wheels, and moreover, it is possible to arrange elements of safety equipment, necessary for operation on the roads, on the structure of the gyroplane. The safety equipment includes especially homologated lights, license plate holders, rearview mirrors, wipers, reflectors, horns and other accessories. The electric motor and safety equipment elements may be controlled by software for gyroplane control, in the form of an application with user interface, installed on a computing device, such as, for example, personal computer, tablet, smartphone or laptop. The computing device with the installed software communicated with the pilot control unit ("Pilot Interface") using wireless technology, such as, for example, Bluetooth® technology. Communication between the computing device and the pilot control unit may be realized by means of wired communication. In a graphic user interface of the application, the operation states and data about the electric drive system of the gyroplane are displayed. The software allows controlling the electric motor, regulator, traction battery and the particular elements of the safety equipment, which are a part of the electric drive system. In case the pilot does not have a computing device connectable to the pilot control unit, the pilot control unit is provided with a hardware interface intended for controlling the necessary functions and reporting of the necessary information for safe gyroplane operation. Among the necessary functions belong especially turning the whole system on and off by the pilot using the switcher, setting the size of torque moment, the battery charge control during flight, displaying the control reports about the operation state of the particular system elements as well as the gyroplane by means of a light control or indicator. Additional information include temperature of the regulator cooler. This information is not necessary for the pilot, as the electric drive system reports possible overheating of the regulator cooler by means of, for example, a control light, and subsequently turns it off securely. The hardware interface includes, for example, switcher and potentiometers, further signaling lights and pointer or digital indicators.

For easy manipulation with the gyroplane during its movement on the ground, the electric drive consists of one or more electric motors and at least one regulator, traction battery and the pilot control unit. The traction battery provides electric energy for the regulator, which regulates the current density, which is identifiable or measurable as the overall electric current flowing through the particular conductor into any of the electric motors. An advantage is that the electric motor is also silent and therefore it is very suitable for transporting the gyroplane between the inhabited area and the gyroplane take-off and landing area.

The electric drive system of a gyroplane is designed for both the three-wheel chassis and the four-wheel chassis known in the state of the art. A gyroplane with a four-wheel chassis has mostly seats for passenger arranged next to each other. Further, a light front controllable axle with two driven chassis wheels is arranged in the front part of the gyroplane chassis. The right seat is usually a pilot's seat and control elements for the flight are arranged therein, and in such case, the left seat is intended for the driver, and it is therefore provided with control elements for movement on the ground. The control elements for movement on the ground communicate with the pilot and especially with the electric drive through regulator and other elements necessary for the movement on the ground level.

In particular, the flight control elements include a knob and built-in airborne instruments, which are arranged in the gyroplane already before installation of the gyroplane electric drive. The control elements for movement on the ground comprise the pilot control unit and hardware interface defined above.

Each chassis wheel may be driven by its own electric motor. Therefore, there may be various variants of the embodiment of the electric drive system of a gyroplane solely by choosing which chassis wheels we want to drive. The present solution of the electric drive system of a gyroplane proposes all possible configurations of driving the chassis wheels for three-wheel and four-wheel gyroplanes, which are clearly illustrated in the drawings.

The left-side embodiment is identical with the right-side embodiment, as only one chassis wheel is driven. It is also possible to drive all chassis wheels. Increasing the number of electric motors results in increasing the number of regulators powered by the traction battery. The regulator may be a multi-channel one for connecting more electric motors or more single-channel regulators may be used.

Such proposed electric drive system of a gyroplane comprises an independent drive for movement in air and an independent drive for movement on the roads. The system allows movement of the gyroplane even without using the pusher propeller, not posing risk of injury to the surroundings, and therefore it is possible to operate the present gyroplane on public roads.

### Description of the Drawings

The invention will be further described by means of drawings, in which Fig. 1 schematically illustrates the electric drive system of a gyroplane comprising the electric motor located outside the axis of the wheels and driving the front chassis wheel, Fig. 2 schematically illustrated the electric drive system for a gyroplane comprising the electric motor arranged outside the axis of the wheels and driving the rear chassis wheel, Fig. 3 illustrated a detail of the electric drive consisting of the electric motor mounted on the support structure and gears, Fig. 4 illustrated a detail of the casing of the driven chassis wheel, Fig. 5a illustrates a block electric connection of the electric drive system of a gyroplane with a single-channel regulator; Fig. 5b illustrates a block electric connection of the electric drive system of a gyroplane with a two-channel regulator; Fig. 5c illustrates a block electric connection of the electric drive system of a gyroplane with four-channel regulator, Fig. 5d illustrates a block electrical connection of the electric drive system of a gyroplane with a general connection for the regulator; Fig. 6 illustrates connection alternatives of the driven travelling wheels with a single-channel regulator; Fig. 7 illustrates connection alternatives of the driven travelling wheels with a pair of single-channel regulators; Fig. 8 illustrates connection alternatives of the driven travelling wheels with one two-channel regulator; Fig. 9 illustrates connection alternatives of the driven travelling wheels with four single-channel regulators; Fig. 10 illustrates connection alternatives of the driven travelling wheels with two two-channel regulators; Fig. 11 illustrates connection alternatives of the driven travelling wheels with one four-channel regulator; Fig. 12 illustrates variants of the embodiment of the driven travelling wheels in the electric drive system of a gyroplane and Fig. 13 illustrates an overview of possible variants of energy transfer from the electric motor to the driven travelling wheel.

### Description of Exemplary Embodiments

The invention will be further described in the following description of an exemplary embodiment of the electric drive system of a gyroplane with reference to the respective drawings. In the said drawings, the present invention is illustrated by means of an exemplary embodiment of the electric drive system for driving the driven travelling chassis wheels of the gyroplane. The examples provided in the description of the application are illustrative.

The electric drive system of a gyroplane **28** may be provided in two variants, which provide solution for transferring the traction energy from the electric motor **1** to the driven chassis wheel **12.** In all variants, the electric drive system of a gyroplane **28** comprises the primary engine **7,** which is connected with the pusher propeller **8** for forward movement and further the electric motor **1** for movement on the roads. The gyroplane **28** is also provided with safety elements for movement on the roads.

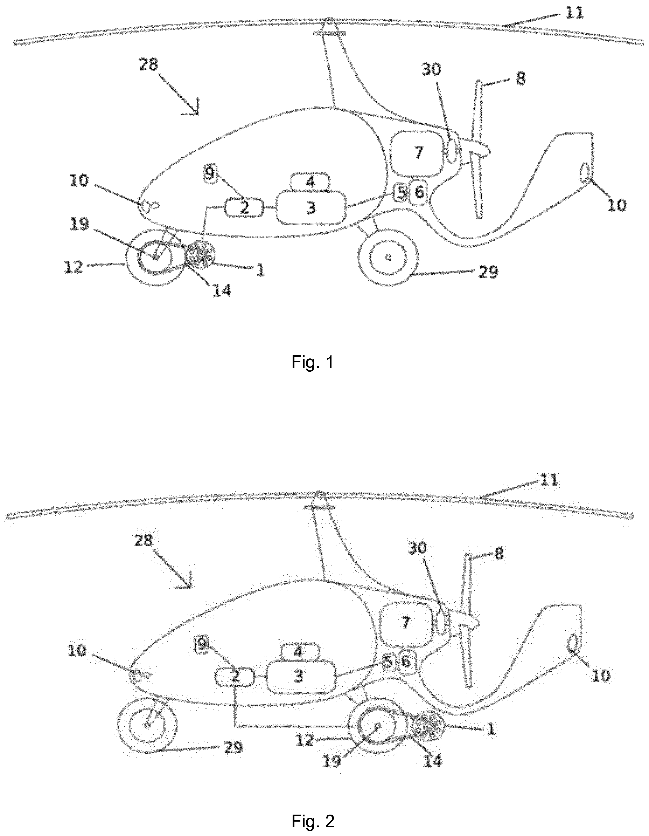

The embodiment of the electric drive of the gyroplane **28,** in which the electric motor **1** is arranged outside the front or rear chassis wheel **29,** is illustrated in Fig. 1 and Fig. 2. The electric drive for the gyroplane **28** comprises the primary engine **7** mechanically connected with the pusher propeller **8,** which provides a take-off speed for the gyroplane **28,** and further the electric motor **1** for movement on the ground. The primary engine **7,** especially a combustion engine, is further connected with the pusher propeller **8** by means of a pulley or a drive belt. Further, the alternator **6,** to which the battery **5** is attached, is built in the combustion engine. The battery **5** is connected to the traction battery **3,** charging it during flight depending on the charging conditions. The alternator **6** uses the primary combustion engine **7** for its propulsion. The traction battery **3** is connected with the management system **4** of the traction battery **3,** which provide safety during operation. The traction battery **3** provides electric energy for the regulator **2,** which regulates the current density, which is identifiable/measurable as the overall electric current flowing in the particular conductor into the electric motor **1**. The electric motor **1** subsequently forms regulated torque on the driven chassis wheel **12**. The torque requirement is defined by a pilot to the regulator **2** pilot, by means of a control unit **9** of "Pilot Interface" type. The gyroplane is further provided with the lights **10** and safety elements, which are required for secure movement on the public roads, wherein all these elements are also controlled by means of the "Pilot Interface" type control unit **9.**

Embodiment of the electric drive of the gyroplane **28,** in which the electric motor **1** is arranged outside the driven chassis wheel **12,** is illustrated in Fig. 2. In this embodiment, the electric drive comprises the electric motor **1** arranged outside the axis of the shaft **19** of the driven wheel **12.** The torque formed by the electric motor **1** is transferred through the belt **14** and the gear, being formed by small and large pulleys **17** and **16,** wherein the large pulley **16** is arranged on the shaft **19** of the driven wheel **12**, while the small gear wheel **18** is attached on the shaft of the electric motor **1**.

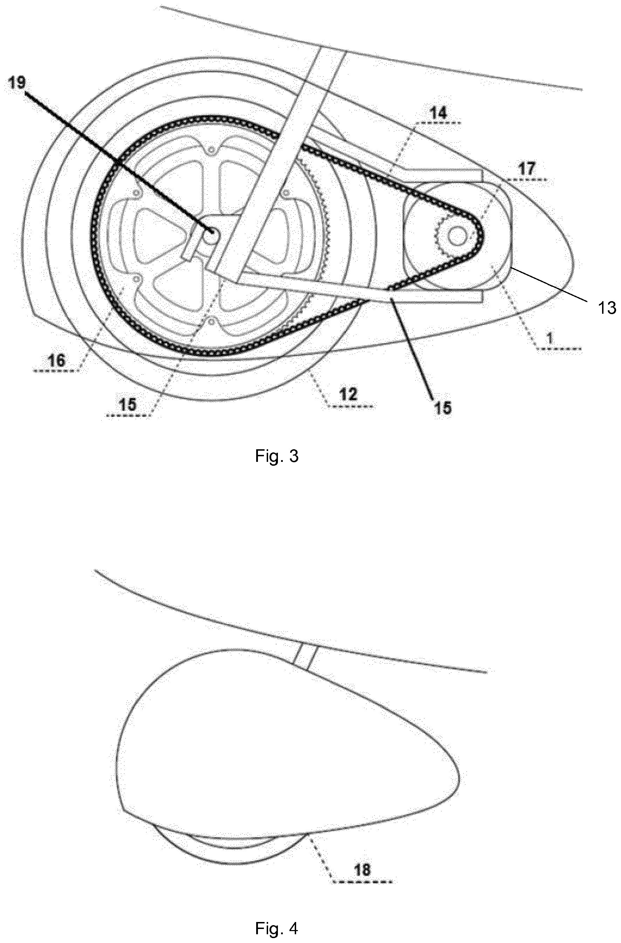

Detail of the electric motor **1** arrangement; outside the driven chassis wheel **12** is illustrated in Fig. 3. In this embodiment, the electric motor **1** is arranged outside the axis of the shaft **19** of the driven chassis wheel **12,** attached in the fork **15.** The electric motor **1** is arranged in the support structure **13,** which is firmly coupled with the fork **15.** The torque is transferred from the electric motor **1** to the driven travelling wheel **12** by means of the gear and the belt **14,** as it is described in the paragraph above. In this arrangement of the electric motor **1,** the electric motor with higher nominal speeds than the nominal speeds of the driven chassis wheel **12** is used, wherein the speeds are reduced to the driven chassis wheel **12** by means of gear. Therefore, it might be concluded that during operation, the speeds of the electric motor **1** range between, for example, 0 and approximately 2500 rpm, wherein the speeds of the driven travelling wheel **12** range between 0 and approximately 500 rpm. This asymmetry is compensated by means of gear ratio determined by the difference of the radius of the pulleys. The rates of the driven wheel are defined by the maximum speed and its radius. The razes of the electric motor are determined by evaluation of various physical facts when selecting the motor.

Therefore, it is possible to use an electric motor with a lower weight. For increasing aerodynamics of the chassis, the driven travelling chassis wheel **12** as well as the electric motor **1** together with the support structure **13** housed in the casing **18,** as it is illustrated in the Fig. 4.

For all variants of arrangement of the electric drive system of a gyroplane **28,** the electric motor **1,** which is arranged outside the driven chassis wheels **12,** and other components of the system are designed in the same manner. The particular variants of the electric drive system of a gyroplane allow to power or all gyroplane travelling wheels **12.** For all these variants of the drive of travelling wheels **12,** it is necessary to choose suitable connection of the regulators **2.**

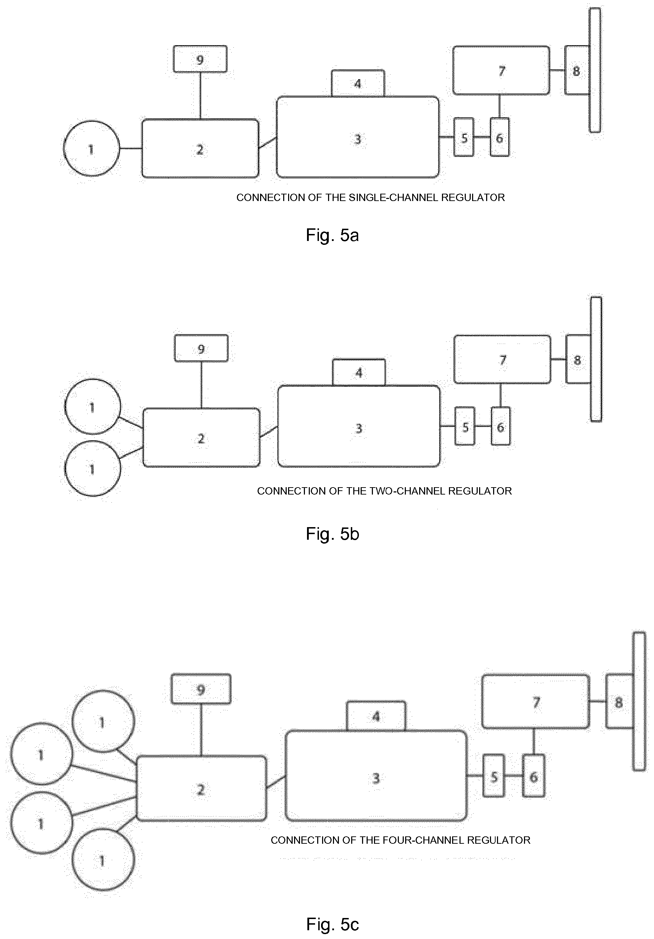

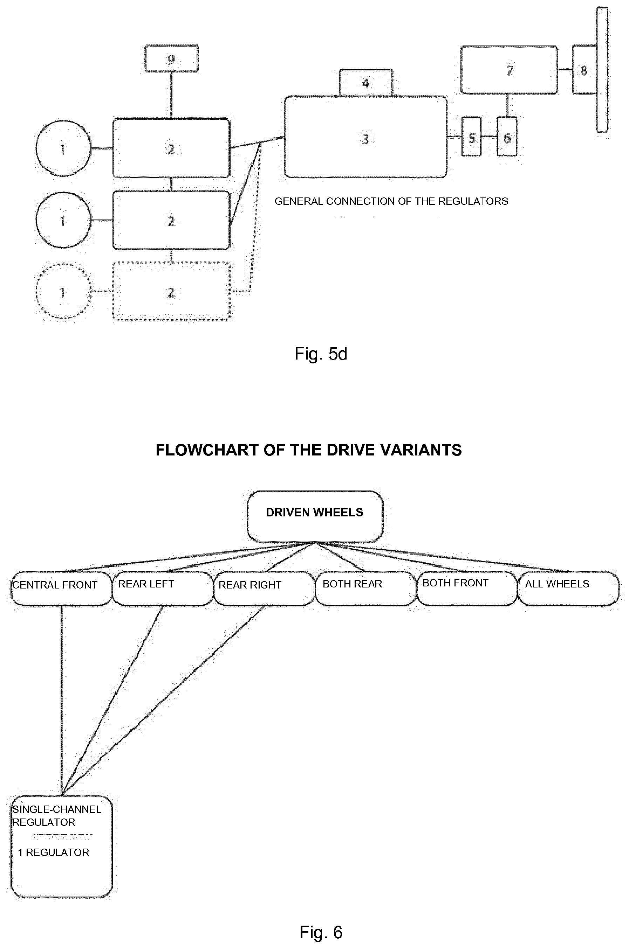

The Fig. 5d illustrates general connection of the regulators **2** in the electric drive system of a gyroplane, wherein the Fig. 5a illustrates connection of the single-channel regulator **2** in the electric drive system of a gyroplane for driving one travelling wheel **12**. The Fig. 5b illustrates connection of the two-channel regulator **2** in the electric drive system of a gyroplane for driving two travelling wheels **12.** The Fig. 5c illustrates connection of the four-channel regulator **2** in the electric drive system of a gyroplane for driving four travelling wheels **12.**

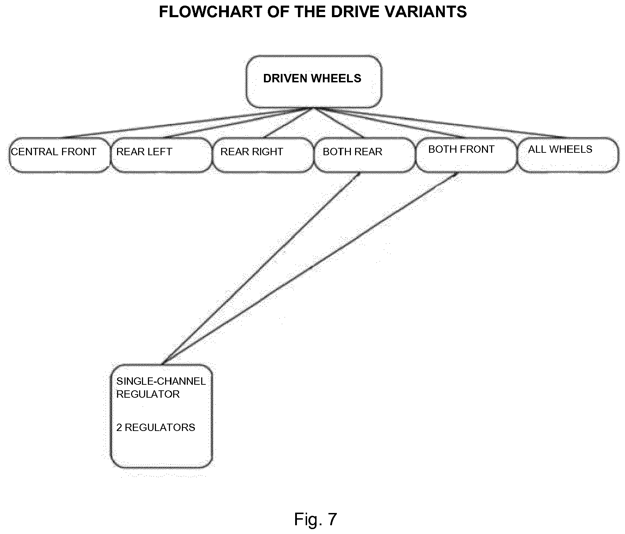

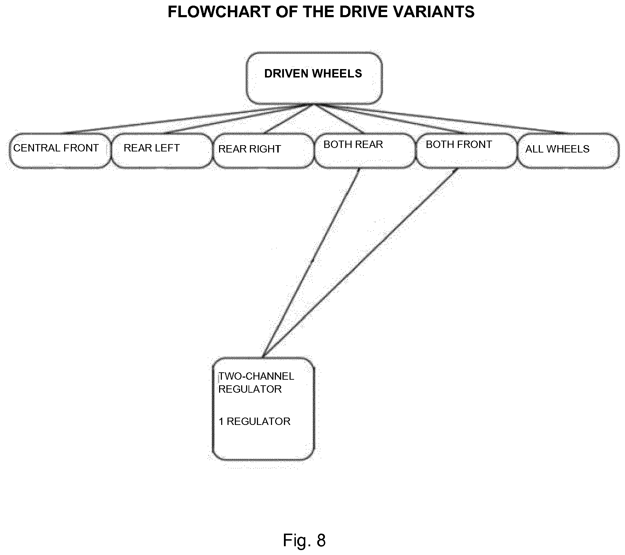

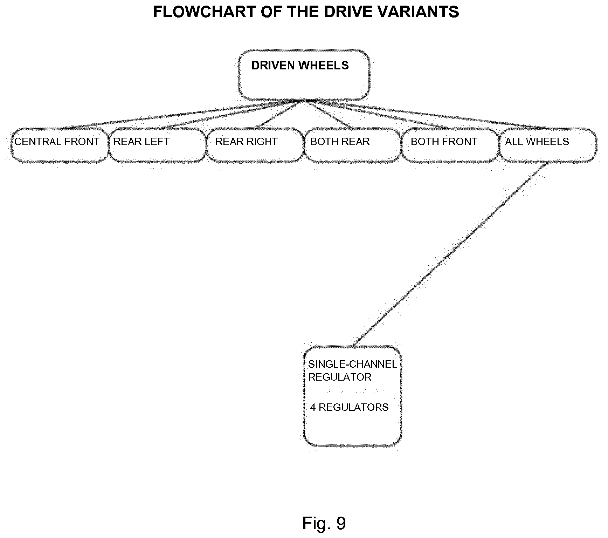

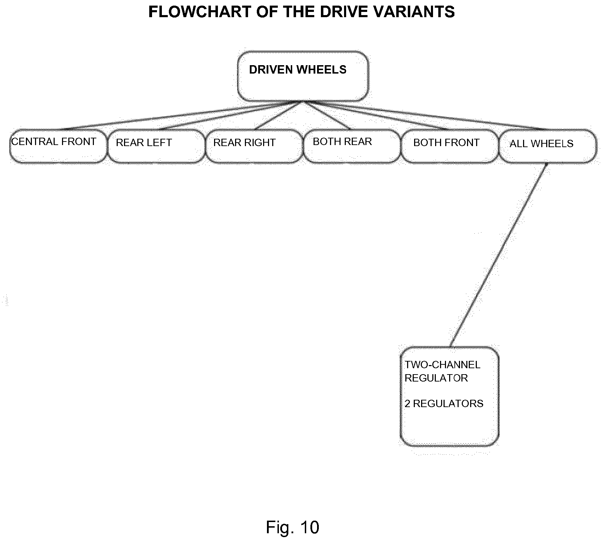

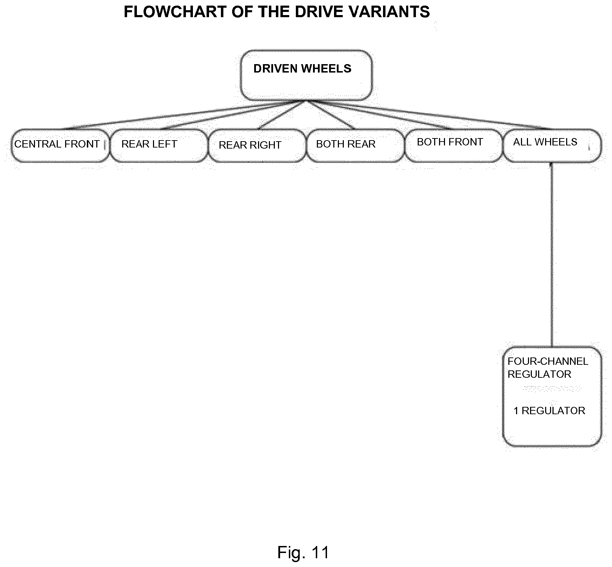

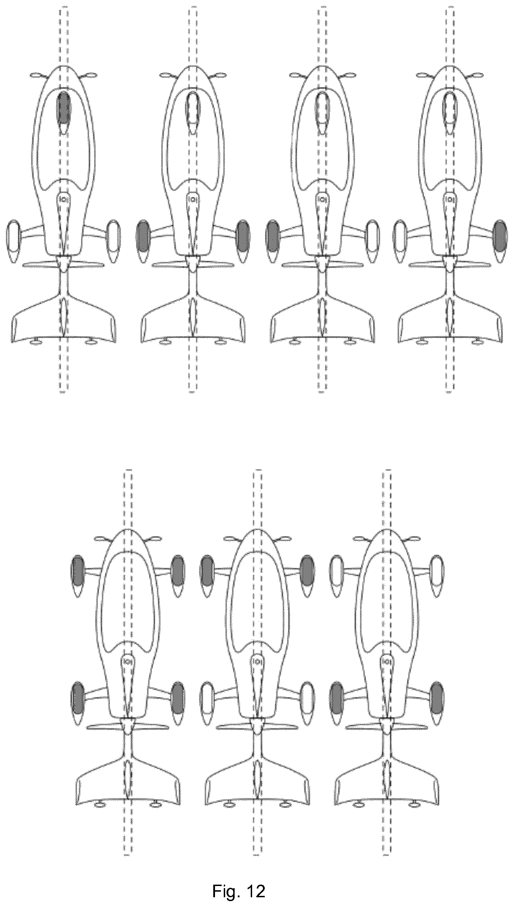

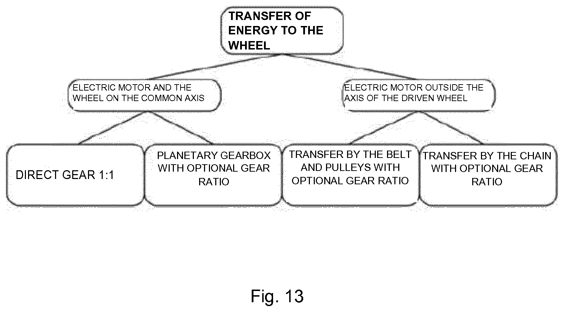

The Fig. 6 illustrates possible variants of controlling one travelling wheel **12** by means of one single-channel regulator **2.** The Fig. 7 illustrates possible variants of controlling two travelling wheels **12** by means of two single-channel regulators **2.** The Fig. 8 illustrates possible variants of controlling two travelling wheels **12** by means of one two-channel regulator **2.** The Fig. 9 illustrates possible variants of controlling four travelling wheels **12** by means of four single-channel regulators **2.** The Fig. 10 illustrates possible variants of controlling four travelling wheels **12** by means of two two-channel regulators **2** and the Fig. 11 illustrates possible variants of controlling four travelling wheels **12** by means of one four-channel regulator **2.** The Fig. 12 illustrates variants of the particular driven travelling wheels **12** in three-wheel and four-wheel gyroplane. An overview of variants of transferring the electric energy from the electric motor **1** to the driven travelling wheel **12,** according to the embodiment type of the electric motor, as it is illustrated in the Fig. 13.

The electric drive system of a gyroplane according to the present invention allows performance of at least two functions, so called discontinuous or partially continuous operation.

For powering the electric motor **1**, the discontinuous operation uses only the energy stored in the traction battery **3,** which is able to store and transfer energy in kW.h units, wherein the primary engine **7** does not need to be in operation. The operation time is limited by the amount of energy stored in the traction battery **3** and the driving style. The traction battery **3** is being recharged during the flight and the primary engine **7** is in operation, wherein the alternator **6** provides electric energy for the charger **5,** charging the traction battery **3** in conjunction with the battery management system **4.**

The continuous operation, as meant herein, uses mostly energy produced in real time by means of the primary engine **7** connected with the alternator **6** and power-rated identically to the primary engine **1,** to power the electric motor **1**. During continuous operation, there is no need to use the traction battery **3.** The operation time is not limited, the electric drive is able to remain in operation as long as the primary engine **7.** The electric drive system for a gyroplane in continuous operation allows legal movement on the road only provided that the pusher propeller **8** is disconnected from the primary motor **1**. The disconnection of the pusher propeller **8** from the primary engine **7** may be realized by means of an ordinary detachable coupling **30.** The detachable coupling **30** and its usage for mutual connection and disconnection of mechanical components is well-known and therefore it is not illustrated in the drawings in detail.

Continuous or discontinuous operation allows connection of the particular parts of the electric drive for a gyroplane according to the present invention, which is schematically illustrated in the Fig. 5a, Fig. 5b, Fig. 5c and Fig. 5d. The primary engine **7,** especially a combustion engine, is mechanically connected to the alternator **6,** which is further electrically connected with the charger **5.** The charger **5** is further coupled to the traction battery **3,** charging it during flight according to the pilot's settings, using the energy from primary combustion engine **7.** The traction battery **3** is further connected with the battery management system **4,** which provides safety during its operation. The traction battery **3** is further electrically connected to the regulator **2,** which communicates bi-directionally with the pilot control unit **9.** The regulator **2** is further coupled to the electric motor **1** and regulates its operation according to the requirements of the "Pilot Interface" type control unit **9**.

### Industrial Applicability

Technical solution of an electric drive for gyroplanes is intended for legal movement of the gyroplane on the road.

### List of Reference Signs

1 - electric motor
2 - regulator
3 - traction battery
4 - Battery Management System
5 - charger
6 - alternator
7 - primary motor
8 - pusher propeller
9 - "Pilot Interface" control unit
10 - lights
11 - support rotor
12 - driven chassis wheel
13 - support structure
14 - pulley
15 - fork
16 - large pulley
17 - small pulley
18 - casing
19 - shaft
28 - gyroplane
29 - chassis wheel
30 - detachable coupling

## Claims

1. A gyroplane (28) comprising a support rotor (11), a primary engine (7) connected with a pusher propeller (8) for movement in air and a driven chassis wheel (12) for movement on roads,
**characterized by** an electric drive system wherein the primary engine (7) is connected by means of a mechanical gear to an alternator (6) further connected to a charger (5) further connected to a traction battery (3), wherein the traction battery (3) is further electrically connected with a regulator (2) and a pilot control unit (9), while the regulator (2) is further connected with an electric motor (1) driving the driven chassis wheel (12), wherein the electric motor (1) is arranged outside the driven chassis wheel (12) in a support structure (13), which is firmly connected with a fork (15) supporting the driven chassis wheel (12),
wherein the electric motor (1) is provided with a small pulley (17) and connected with the driven chassis wheel (12) by means of a belt (14) or chain, wherein the traction battery (3) is bi-directionally coupled with a battery management system (4).

2. A gyroplane according to claim 1, **characterized in that** it has the primary engine (7) connected by means of a detachable coupling (30) with the pusher propeller (8).

3. A gyroplane according to claims 1 or 2, **characterized in that** it has the alternator (6) power-rated identically with the electric motor (1).

4. A gyroplane according to any of the preceding claims, **characterized in that** the electric motor (1) and the driven chassis wheel (12) are arranged in a casing (18).

5. A gyroplane according to any of the preceding claims, **characterized in that** the pilot control unit (9) is provided with wireless communication technology, wherein these technologies may be combined.

## Patentansprüche

1. Ein Tragschrauber (28) umfassend einen Tragrotor (11), einen Primärmotor (7), der mit einem Schubpropeller (8) zur Bewegung in Luft und mit einem angetriebenen Fahrwerksrad (12) zur Bewegung auf Straßen verbunden ist, **gekennzeichnet durch** ein elektrisches Antriebssystem, wobei der Primärmotor (7) über ein mechanisches Getriebe mit einem Wechselstromgenerator (6) verbunden ist, der ferner mit einem Ladegerät (5) verbunden ist, das ferner mit einer Traktionsbatterie (3) verbunden ist, wobei die Traktionsbatterie (3) ferner mit einem Regler (2) und mit einer Pilotsteuereinheit (9) elektrisch verbunden ist, wobei der Regler (2) ferner mit einem das angetriebene Fahrwerksrad (12) antreibenden Elektromotor (1) verbunden ist, wobei der Elektromotor (1) außerhalb des angetriebenen Fahrwerksrades (12) in einer Tragstruktur (13) angeordnet ist, die mit einer das angetriebene Fahrwerksrad (12) tragenden Gabel (15) fest verbunden ist, wobei der Elektromotor (1) mit einer kleinen Riemenscheibe (17) versehen ist und über einen Riemen (14) oder eine Kette mit dem angetriebenen Fahrwerksrad (12) verbunden ist, wobei die Traktionsbatterie (3) bidirektional mit einem Batteriemanagementsystem (4) gekoppelt ist.

2. Der Tragschrauber nach Anspruch 1, **dadurch gekennzeichnet, dass** er den Primärmotor (7) aufweist, der über eine lösbare Kupplung (30) mit dem Schubpropeller (8) verbunden ist.

3. Der Tragschrauber nach Anspruch 1 oder 2, **dadurch gekennzeichnet, dass** er den Wechselstromgenerator (6) aufweist, der mit dem Elektromotor (1) eine identische Nennleistung hat.

4. Der Tragschrauber nach einem der vorhergehenden Ansprüche, **dadurch gekennzeichnet, dass** der Elektromotor (1) und das angetriebene Fahrwerksrad (12) in einem Gehäuse (18) angeordnet sind.

5. Der Tragschrauber nach einem der vorhergehenden Ansprüche, **dadurch gekennzeichnet, dass** die Pilotsteuereinheit (9) mit drahtloser Kommunikationstechnik versehen ist, wobei diese Technologien kombinierbar sind.

## Revendications

1. Un autogire (28) comprenant un rotor de support (11), un moteur primaire (7) relié à une hélice propulsive (8) pour le déplacement dans l'air et à une roue de châssis entraînée (12) pour le déplacement sur des routes, **caractérisé par** un système d'entraînement électrique, où le moteur primaire (7) est relié au moyen d'un engrenage mécanique à un alternateur (6) qui en outre relié à un chargeur (5) qui en outre relié à une batterie de traction (3), où la batterie de traction (3) est en outre électriquement reliée à un régulateur (2) et à une unité de commande pilote (9), tandis que le régulateur (2) est en outre relié à un moteur électrique (1) entraînant la roue de châssis entraînée (12), où le moteur électrique (1) est disposé à l'extérieur de la roue de châssis entraînée (12) dans une structure de support (13) qui est fermement reliée à une fourche (15) supportant la roue de châssis entraînée (12), où le moteur électrique (1) est muni d'une petite poulie (17) et relié à la roue de châssis entraînée (12) au moyen d'une courroie (14) ou d'une chaîne, où la batterie de traction (3) est couplée de manière bidirectionnelle à un système de gestion de batterie (4).

2. L'autogire selon la revendication 1, **caractérisé en ce qu'il** comporte le moteur primaire (7) relié au moyen d'un accouplement amovible (30) à l'hélice propulsive (8).

3. L'autogire selon les revendications 1 ou 2, **caractérisé en ce qu'il** comporte l'alternateur (6) à puissance nominale identique au moteur électrique (1).

4. L'autogire selon l'une quelconque des revendications précédentes, **caractérisé en ce que** le moteur électrique (1) et la roue de châssis entraînée (12) sont disposés dans un boîtier (18).

5. L'autogire selon l'une quelconque des revendications précédentes, **caractérisé en ce que** l'unité de commande pilote (9) est munie d'une technologie de communication sans fil, où ces technologies sont combinables.
